# EUROPEAN PATENT APPLICATION

(11) **EP 1 052 426 A1**
(43) Date of publication of application: **15.11.2000**
(21) Application number: 00850081.1
(22) Date of filing: 12.05.2000
(51) Int. Cl.: F16G 15/00, A63B 9/00

(54) **Chain cross**

(30) Priority: 14.05.1999 ES 9901025
(71) Applicant: Xaloc Equipamentos S.L., 46290 Alcacer (Valencia) (ES)
(72) Inventor: Jimenez Azpilicueta, Miren Karmele, 46290 Alcacer (Valencia) (ES)
(74) Representative: Berglund, Erik Wilhelm

(57) **Abstract**

The knot for chain netting which is the object of the present patent is used in children's playgrounds and is made up of: an open metal ring (1) which joins the end links (3) of the chains; two identical covering parts (4) for covering the knot, with the shape of the Maltese cross the arms of which are externally convex and internally hollow, with two external radial divisions (6) and one center (7) which have semicircular indents (8) for fitting the ring (1); a rivet for joining the two parts (4), which go through a central hole (10); two finishing caps (12) which firmly close the holes (11) for housing the ends of the joining means.

## Description

### 1. OBJECT

The object of the present invention protected in this patent, consists of a chain cross or a jointing knot for chain netting.

The said object has particular application to the formation of orthogonal chain netting which, appropriately framed, enables the configuration of simple structures of low height which are available in children's playgrounds, for children to climb on.

### 2. BACKGROUND

There are numerous means known which are available in children's playgrounds for enabling children to carry out activities which are both playful and physically active, such as climbing.

Among the means for carrying out the latter hanging ropes (with or without knots) and chains in various arrangements are known, among which netting, since obviously, the combination of horizontal and vertical sections makes climbing easier due to hand grips and supports, adjacent and one on top of the other.

Nevertheless, the solution for jointing knots between the different spans of chains, has not been satisfactorily resolved responding to the requirements which must be complied with in terms of effectiveness, safety and aesthetics.

### 3. DESCRIPTION OF THE INVENTION

The aim of the invention constituting the object of the present Patent, consists in providing an original solution for jointing knots of chain netting, which combines the solidity of the connection between the sections of the netting with the safety which is provided by the covering of the linking elements and the rigidity of the joint itself being riveted and immobile.

The structure of the new jointing knot is comprised of the following elements:

A steel O-ring, not fully closed the opening of which enables the coupling of the end links of the four sections of chain which it joins.

Two covering parts of the knot, identically shaped, in the shape of the Maltese cross inscribed on one circumference, on the external side of which the end arms are convexly curved and on the internal side of which each arm is hollowed out, in the hollow of which there are three radial divisions, two of them at the end and one slightly offset in the center, all of them having large semicicurlar indents, of sufficient size for the correct housing of the ring, except one of these center divisions which is continuous, i.e., without indent.

A rivet for joining the two covering parts, which passes through them by a central hole, with its head fitted into the undercuts of the external sides of these covering parts.

Two finishing caps for closing the holes of the external sides of the covering parts of the knot, to hide the heads of the joining rivet. They are cross-shaped, with the areas of intersection of the arms rounded, and which are pressed into holes of identical shape with their arms in radial direction centered over the arms of the covering parts of the knot.

The assembly of the previously described structural elements is carried out as follows:

Once the end links of the four sections of chain are connected into the metal ring, inserting them through its opening, this is placed in the indents of the divisions on the internal side of one of the covering parts of the knot, ensuring that the four links are arranged one in each one of the center spaces between the arms of the Maltese cross, and the only continuous division (with no indent) placed in the opening of the ring to prevent it turning.

The other covering part is arranged over this assembly, in a symmetrically inverted position, fitting it firmly on the ring and ensuring that its continuous division also stays in the ring, next to that of the opposite part.

The connected covering parts are firmly joined with the central rivet and the holes for housing its heads are covered with the finishing cross caps.

### 4. BRIEF DESCRIPTION OF THE DRAWINGS

To compliment the description of the invention and to facilitate the interpretation of the formal, structural and functional characteristics of which it is the object, drawings are attached in which are represented the different aspects of a preferred embodiment of the jointing knot for chain netting, which constitutes the object of the present Patent.

In said drawings:

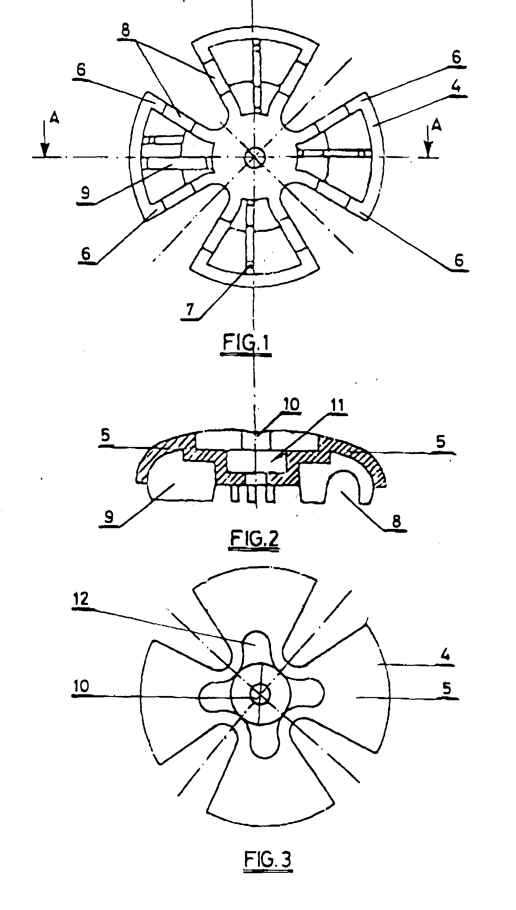

Figure 1, represents in the lower plan one of the covering parts of the knot; figure 2 a section of this in a plan whose section is indicated by A-A in figure 1; and Figure 3 is a plan view of this part, from its upper side.

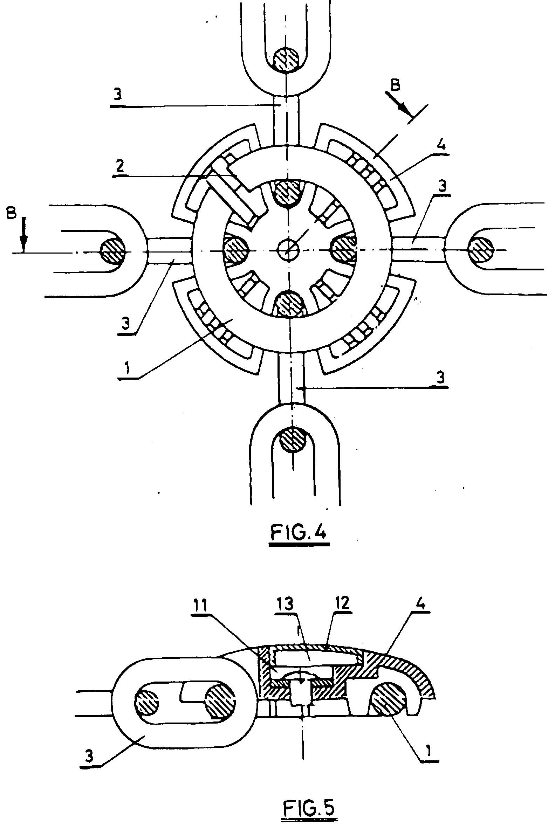

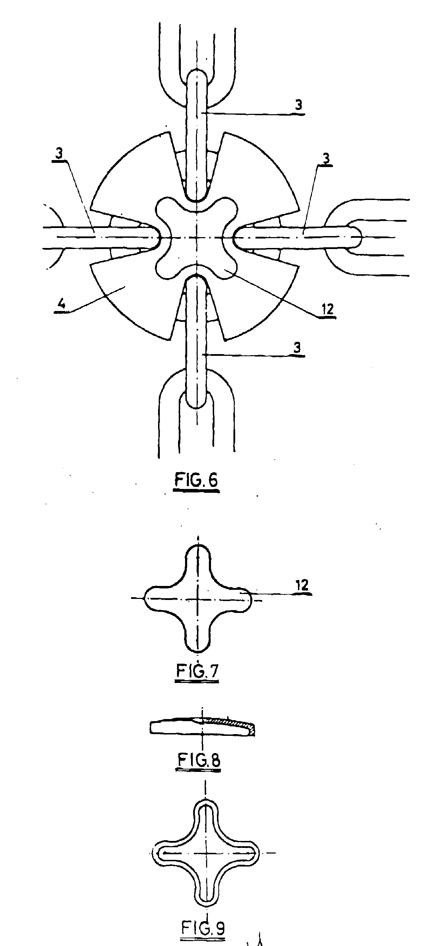

Figure 4 shows a lower plan of the knot fitted on a covering part, i.e. with the metal ring joining the end links of the four sections of chain; and figure 5 is a section composed of the representation in figure 4, by plans whose section is designated in it as B-B.
Figure 6 shows the knot fitted, as an observer sees it.
Figure 7 is a lower plan of a finishing cross cap; Figure 8 a semi cross section of this; and Figure 9 an upper plan of it.

### 5. DESCRIPTION OF A PREFERRED EMBODIMENT

To clearly illustrate the nature and the scope of the advantageous application of the jointing knot for chain netting which constitutes the object of the present invention, its structure and its use will be described hereafter, with reference to the drawings which, in order to represent a preferred embodiment of said object, in an informative way, are to be considered in their widest sense and not as limiting the application and the content of the invention.

The jointing knot for chain netting is of the type used in children's playgrounds forming orthogonal grids framed to make simple climbing structures.

Its structure is composed of the following elements:
- A metal ring (1) not fully closed, whose opening (2) allows the joining of the end links (3) of the four sections of chain which it joins.
- Two identical parts (4) for covering the knot, with the shape of the Maltese Cross inscribed on one circumference, on the external side of which the ends(5) of the arms are convexly curved and on the internal side of which each arm is hollowed out, with three radial divisions in its undercut, two of them at the end (6) and one slightly offset in the center (7), all of them have large semicircular indents (8) of sufficient size for the correct fitting of the ring (1), except one of them (9) which has no indent.
- A rivet for joining the two parts (4) through a center hole (10), with their heads fitted in the undercuts (11) on the external sides of said parts (4).
- Two finishing cross caps (12) which cover and close the cross-shaped holes (11), with the areas of intersection of the arms rounded, and which are pressed into holes (13) of identical shape, with their arms in radial direction centered over the arms of the parts (4).

In order to assemble its structural components, the following operations are successively carried out.
- The end links (3) of the chains are joined to the ring (1) inserting them through its opening (2).
- The ring (1) is placed in the indents (8) of the divisions (6)-(7) on the internal side of one of the covering parts (4) so that each of the four links (3) are arranged one in each one of the center spaces between the arms of the Maltese cross and the only division (9) with no indent, is placed in the opening (2) of the ring (1) to prevent it turning.
- The other part (4) is placed over this symmetrically inverted position, fitting it firmly on the ring (1) and ensuring that its continuous division (9) also stays in the opening (2) of the ring (1), next to the same division of the opposite part.
- The two covering parts (4) are joined linked by means of the rivet which passes through them and the holes (11) where its head and its nut are fitted are covered with the finishing cross caps (12).

## Claims

1. A jointing knot for chain netting, of the type used in children playgrounds, which form for instance orthogonal grids framed to install simple climbing structures, characterized in that their structure is made up of the following elements:
- a metal ring (1) not fully closed, with an opening (2) which allows the joining of the end links (3) of for instance four sections of chain which it joins; and
- a locking structure releasably fittable to the ring closing the opening in the ring thus preventing the chain links from coming loose.

2. jointing knot according to claim 1, characterized in the locking structure also being provided with means separating the links of the different chains.

3. A jointing knot according to claim 1 or 2, characterized in the locking structure also being provided with means enclosing the ring on its outside enabling the locking structure to take up the part of the forces from the chains , that otherwise would tend to open up the ring.

4. A jointing knot according to any of the preceding claims, characterized in the ring being slightly flexible and with an opening slightly smaller that the cross section of the chains so that the chains can be pushed into the ring or out of it, but do not fall out of themselves during assembling.

5. A jointing knot according to any of the preceding claims, characterized in the locking structure comprising two locking pieces enclosing between them the ring with the inserted chain links and provided with recesses for the ring and chain links including means preventing the ring from rotating and thus from releasing any chain.

6. A jointing structure according to any of the preceding claims, characterized in the locking structure comprising two identical locking pieces.

7. A jointing knot according to any of the preceding claims, characterized in the locking structure comprising two identical pieces (4) for covering the knot, with the shape of the Maltese Cross, on the external side of which the end arms (5) are convexly curved and on the internal side of which each arm is hollowed out, with three radial divisions in its undercut, two of them at the end (6) and one slightly offset in the center (7). All of them with large semicircular indents (8), of sufficient dimensions for the correct fitting of the ring (1), except for one of them (9) that has no indent.

8. A jointing knot according to any of the claims 5 - 7, characterized in the use of a rivet or the like for joining the two parts (4) through a center hole (10), with their heads fitted in undercuts (11) on the external side of said parts (4).

9. Jointing knot characterized in that it is provided with finishing cross caps (12) covering and closing for instance cross-shaped holes (11) where the areas of intersection of the arms are rounded and which are pressed into holes (13) of identical shape, with their arms in radial direction centered over the arms of the other parts (4).

10. A jointing knot for chain netting, according to Claim 1, characterized in that to assemble its structural components the following operations are successively carried out: the end links (3) of the chains are joined to the ring (1), inserting them through the opening (2); the ring (1) is placed in the indents (8) of the divisions (6)-(7) on the internal side of one of the covering parts (4), so that the each of the four links (3) are arranged one in each one of the center spaces between the arms of the Maltese Cross and the only division (9) that has no indent is placed in the opening (2) of the ring (1) to prevent it from turning; the other piece (4) is arranged over this assembly in a symmetrically inverted position, fitting it firmly on the ring (1) and ensuring that the division (9) also stays in the opening (2) of the ring (1), next to the same division of the opposite part; the two covering parts (4) are joined with the rivet that goes through them and the holes (11) where the rivet head and nut are fitted are covered with the finishing cross caps (12).
